# EUROPÄISCHE PATENTSCHRIFT

(11) **EP 2 386 844 B1**
(45) Veröffentlichungstag und Bekanntmachung des Hinweises auf die Patenterteilung: **08.01.2014**
(21) Anmeldenummer: 10405102.4
(22) Anmeldetag: 12.05.2010
(51) Int. Cl.: G01L 3/02, G01L 3/10

(54) **Drehmomentsensor**
Torque sensor
Capteur de couple

(43) Veröffentlichungstag der Anmeldung: 16.11.2011
(73) Patentinhaber: Electragil GmbH, 8444 Henggart (CH)
(72) Erfinder: Bruehwiler, Peter Friedrich, CH-8113 Boppelsen (CH)
(74) Vertreter: Rüfenacht, Philipp Michael

(56) Entgegenhaltungen:
- US-A- 2 403 952
- US-A- 4 173 265
- US-A- 5 485 757

## Beschreibung

### Technisches Gebiet

Die Erfindung betrifft einen Drehmomentsensor, umfassend:
a) ein erstes Drehteil und ein zweites Drehteil, wobei das erste Drehteil eingerichtet ist, um daran eine Drehmomentkraft anzulegen; und
b) mindestens ein elastisches Übertragungselement, welches derart zwischen dem ersten Drehteil und dem zweiten Drehteil angeordnet ist, dass die Drehmomentkraft vom ersten Drehteil über das mindestens eine elastische Übertragungselement an das zweite Drehteil übertragen wird, wobei sich das erste Drehteil gegenüber dem zweiten Drehteil in Funktion der angelegten Drehmomentkraft um einen messbaren und der Drehmomentkraft zuordenbaren Verdrehwinkel verdreht.

### Stand der Technik

Drehmomentsensoren sind im Stand der Technik bekannt, um beispielsweise das Drehmoment zu erfassen, welches auf eine Kurbelwelle wie z.B. die Tretkurbel eines Fahrrads wirkt und zum Antrieb des Hinterrads verwendet wird. In herkömmlicher Weise ist dabei zwischen zwei Festkörpern ein Federelement mit verminderter Steife angeordnet, welches die beiden Festkörper verbindet und sich verformt, wenn eine Kraft einwirkt. Zur Messung der Verformung können beispielsweise Dehnmessstreifen verwendet werden.

Die DE 699 15 185 zeigt eine Vorrichtung zur Messung des Drehmoments zwischen zwei koaxialen Wellen. Ein Ring ist mit einer ersten Welle starr verbunden. Eine zweite Welle trägt einen Keil, der in einem Spalt in dem Ring sitzt. Ein Nadellager oder Teflonring umgibt einen Hauptabschnitt des Rings, welcher dadurch ohne bemerkenswerte Reibung von der zweiten Welle gehalten wird. Auf Verbindungsabschnitten sitzen Dehnungsmessstreifen. Die Drehmomente zwischen den Wellen und werden auf den Ring in Form von Kräften ausgeübt, die auf die Ansatzstücke und als Biegekräfte auf die Verbindungsabschnitte wirken und auf die Dehnungsmessstreifen übertragen werden.

Die DE 37 37 696 zeigt eine Messeinrichtung zur Bestimmung des Drehmoments eines rotierenden Maschinenteils. Eine Welle weist an einem Ende einen Flansch auf, welcher als Speichenrad ausgebildet ist. Auf den Kranz kann ein Antriebsmoment eingeleitet werden. Jede zweite Speiche ist fest mit der Nabe verbunden. Die übrigen Speichen sitzen fest auf der Nabe, sind aber vom Kranz getrennt. Der äussere Kranz ist mit einer ersten Schlitzscheibe und die übrigen Speichen mit einer zweiten Schlitzscheibe starr verbunden. Im Bereich der freien Enden der Speichen sind Anschläge angeordnet, so dass eine Verdrehung der Speiche von ca. 0.3° bis 0.7° möglich ist. Die Verdrehung der Schlitzscheiben wird gemessen und einem Drehmoment zugeordnet.

Die CN 2 374 854 zeigt einen Drehmomentsensor für ein elektrisch unterstütztes Fahrrad. Eine angetriebene Scheibe und eine treibende Scheibe mit Nuten sind mit einer Federeinrichtung versehen, wobei bei einer Pedalkraft eine Phasenverschiebung entsteht, welche von Sensoren erfasst wird. Die Federeinrichtung umfasst Keile und Übertragungsträger sowie einen Anschlag.

Die oben genannten Drehmomentsensoren weisen entweder keinen Überlastschutz auf oder sie sind voluminös.

Aus der DE 26 58 697 (Still GmbH) bzw. der US 4,173,265 ist ein Sensor zum Messen des Drehmoments in einer Lenkwelle eines Kraftfahrzeugs bekannt. An einer ersten Welle ist eine Hülse befestigt, in welcher ein Lenkwellenteil drehbar gelagert ist. Eine rohrförmige elastische Muffe sitzt auf dem Lenkwellenteil und ist mit ihrer äusseren Mantelfläche mit der Hülse verbunden. Am Lenkwellenteil ist ein Querstift befestigt, der in eine Ausnehmung der Hülse hineinragt. Die Ausnehmung ist breiter als der Querstift, so dass ein Spiel gegeben ist und die innenwand der Ausnehmung die maximale Relativdrehung der Hülse sowie dem Wellenteil begrenzt, wobei eine direkte Kraftübertragung zwischen der Hülse und dem Lenkwellenteil erfolgt.

Aus der US 5,485,757 (Foxwell) ist ein Drehmomentsensor eines Verbrennungsmotors bekannt. Das Motordrehmoment oder Gegenmoment der Räder verbiegt die radial verlaufenden Blattfedern bis zu einem Ausmass, welches durch Schlitze und Durchmesser festgelegt ist und eine Überlastung der Blattfedern vermeidet. Mit Positionssensoren wird die Bewegung erfasst und einem Mikrokontroller zur Auswertung zugeleitet.

### Darstellung der Erfindung

Aufgabe der Erfindung ist es, einen dem eingangs genannten technischen Gebiet zugehörenden Drehmomentsensor zu schaffen, welcher gleichzeitig eine kompakte Bauweise und einen Überlastschutz aufweist.

Die Lösung der Aufgabe ist durch die Merkmale des Anspruchs 1 definiert. Gemäss der Erfindung ist mindestens ein starres Übertragungselement vorgesehen, welches mit dem ersten Drehteil respektive mit dem zweiten Drehteil fest verbunden ist und in mindestens einem Durchbruch des zweiten Drehteils respektive des ersten Drehteils derart geführt ist, dass bei einem maximalen Verdrehwinkel das mindestens eine starre Übertragungselement an einem Rand des mindestens einen Durchbruchs anschlägt und somit die Drehmomentkraft vom ersten Drehteil über das mindestens eine starre Übertragungselement an das zweite Drehteil übertragen wird.

Durch die Anordnung eines starren Übertragungselements in einem Durchbruch eines Drehteils ergibt sich eine kompakte Bauweise und zugleich ein Überlastschutz. Die Drehmomentübertragung erfolgt vom ersten Drehteil auf das zweite Drehteil, und zwar bis zu einem maximalen Verdrehwinkel zwischen dem ersten und zweiten Drehteil über das mindestens eine elastische Übertragungselement und beim maximalen Verdrehwinkel über das starre Übertragungselement.

Das starre Übertragungselement kann aus einem formstabilen Werkstoff wie beispielsweise rostbeständigem Stahl, Aluminium, Messing oder irgendeinem anderen formstabilen Werkstoff hergestellt sein. Das elastische Übertragungselement kann aus einem elastischen Werkstoff wie beispielsweise Karbon, d.h, einem kohlenstofffaserverstärktem Kunststoff, oder irgendeinem anderen elastischen Werkstoff hergestellt sein.

Die Materialwahl und Dimensionierung des starren und des elastischen Übertragungselements kann entsprechend der gestellten Anforderung gewählt sein. So können das starre und das elastische Übertragungselement beispielsweise aus Bolzen oder Stäben bestehen, wobei das starre Übertragungselement z.B. aus einem rostbeständigen Stahl hergestellt ist mit einem Durchmesser der grösser ist als der Durchmesser des elastischen Übertragungselements, welches z.B. aus Karbon hergestellt ist. Auch die Länge der Bolzen und Stäbe kann entsprechend der gestellten Anforderung gewählt sein.

Die Erfassung des Verdrehwinkels zwischen dem ersten und dem zweiten Drehteil kann in irgendeiner bekannten Weise mittels Dehnmessstreifen, optischen Sensoren, magnetischen Sensoren oder irgendeiner anderen Weise erfolgen.

Bevorzugt umfasst das erste Drehteil eine Kurbelwelle und das zweite Drehteil eine Antriebshülse, wobei die Kurbelwelle in der Antriebshülse drehbar gelagert ist. Durch die Lagerung der Kurbelwelle in der Antriebshülse ergibt sich eine koaxiale Anordnung und somit eine kompakte Bauform. Die Kurbelwelle kann beispielsweise an den Enden mit Tretkurbeln verbunden sein, um die Tretkraft einer Person aufzunehmen, welche über das mindestens eine elastische oder starre Übertragungselement von der Kurbelwelle auf die Antriebshülse übertragen wird. Die Antriebshülse ihrerseits kann einen Abtrieb aufweisen, um eine Antriebskraft beispielsweise über eine Kette an ein Rad zu übertragen.

Vorzugsweise ist der mindestens eine Durchbruch an der Antriebshülse ausgebildet. Der mindestens eine Durchbruch kann als in der Antriebshülse angebrachte Bohrung hergestellt sein. Das mindestens eine starre Übertragungselement kann als Bolzen hergestellt sein, welcher in die Kurbelwelle geschraubt ist oder damit verklebt ist und in die mindestens eine Bohrung eingreift, wobei der Durchmesser des Bolzens kleiner ist als der Durchmesser der Bohrung, so dass der Bolzen erst bei einem maximalen Verdrehwinkel zwischen der Kurbelwelle und der Antriebshülse am Rand der Bohrung anschlägt und das Drehmoment von der Kurbelwelle auf die Antriebshülse überträgt. Dadurch wird eine einfache und robuste Konstruktion des Überlastschutzes bei zugleich kompakter Bauweise geschaffen.

Bevorzugt weist die Kurbelwelle ein scheibenförmiges Teil auf, an welchem der mindestens eine Durchbruch ausgebildet ist. Das scheibenförmige Teil kann Bestandteil einer entsprechend hergestellten Kurbelwelle sein oder als Bauteil an der Kurbelwelle angeschraubt oder angeklebt sein. Der mindestens eine Durchbruch kann als Bohrung ausgeführt sein, in welche als starres Übertragungselement beispielsweise ein Bolzen eingreift, welcher an der Antriebshülse befestigt ist. Der Durchmesser des Bolzens ist kleiner als der Durchmesser der Bohrung. Somit schlägt der Bolzen erst bei einem maximalen Verdrehwinkel zwischen der Kurbelwelle und der Antriebshülse am Rand der Bohrung an.

Vorzugsweise sind ein Ende des mindestens einen starren Übertragungselements mit dem ersten Drehteil, das andere Ende des mindestens einen starren Übertragungselements mit einem Ende des mindestens einen elastischen Übertragungselements und das andere Ende des mindestens einen elastischen Übertragungselements mit dem zweiten Drehteil verbunden. Zur Verbindung des starren mit dem elastischen Übertragungselement kann ein Haltering vorgesehen sein, mit welchem das starre und das elastische Übertragungselement fest verbunden, also z.B. damit verschraubt oder verklebt ist. Die Drehmomentübertragung erfolgt vom ersten Drehteil über das starre und elastische Übertragungselement an das zweite Drehteil, wobei sich das erste Drehteil wegen dem mindestens einen elastischen Übertragungselement gegenüber dem zweiten Drehteil entsprechend dem angelegten Drehmoment verdreht, und zwar bis zu einem maximalen Verdrehwinkel, bei welchem das starre Übertragungselement an einem Rand eines Durchbruchs anschlägt und die Übertragung des Drehmoments vom ersten auf das zweite Drehteil über das starre Übertragungselement erfolgt. Das starre Übertragungselement kann beispielsweise in einer radialen Richtung zu einer Achse des ersten Drehteils und das elastische Übertragungselement kann parallel zu einer Achse des zweiten Drehteils angeordnet sein. Das radial angeordnete starre Übertragungselement kann dabei besonders kurz ausgeführt werden, was der Anforderung an die Starrheit entgegenkommt, und das elastische Übertragungselement kann besonders lang ausgeführt werden, was der Anforderung an die Elastizität entgegenkommt.

Bevorzugt sind ein Ende des mindestens einen elastischen Übertragungselements mit dem ersten Drehteil und das andere Ende des mindestens einen elastischen Übertragungselements mit dem zweiten Drehteil verbunden. Das starre Übertragungselement ist mit dem ersten respektive dem zweiten Drehteil verbunden, wobei es in einen Durchbruch des zweiten respektive des ersten Drehteils eingreift. Das elastische Übertragungselement kann somit unabhängig vom starren Übertragungselement angebracht sein, was zusätzliche Möglichkeiten bietet, um die Bauform kompakt zu halten.

Vorzugsweise umfasst das mindestens eine elastische Übertragungselement mindestens einen Dehnstab, welcher im Wesentlichen parallel oder radial zu einer Achse des zweiten Drehteils angeordnet ist. Der Dehnstab kann aus irgendeinem elastischen Material wie beispielsweise Karbon hergestellt sein. Durch die radiale Anordnung kann sich eine verkürzte Bauform des Dehnstabs ergeben, während die parallele Anordnung eine verlängerte Bauform ermöglicht. Um eine erwünschte Elastizität des Dehnstabs zu erhalten, kann ein Durchmesser des Dehnstabs im Falle einer radialen Anordnung kleiner gewählt sein als im Falle einer parallelen Anordnung.

Bevorzugt umfasst das mindestens eine starre Übertragungselement einen Bolzen, welcher im Wesentlichen parallel oder radial zu einer Achse des ersten Drehteils angeordnet ist. Der Bolzen kann aus irgendeinem starren Material wie beispielsweise einem rostbeständigen Stahl hergestellt sein. Durch die radiale Anordnung kann sich eine verkürzte Bauform des Bolzens ergeben, während die parallele Anordnung eine verlängerte Bauform ermöglicht. Um eine erwünschte Starrheit des Bolzens zu erhalten, kann ein Durchmesser des Dehnstabs im Falle einer parallelen Anordnung grösser gewählt sein als im Falle einer radialen Anordnung.

Vorzugsweise sind ein erster Messring mit dem ersten Drehteil und ein zweiter Messring mit dem zweiten Drehteil verbunden, wobei ein Auswertungsmodul angeordnet ist, um eine Phasendifferenz zwischen einem ersten bzw. zweiten Sensorsignal eines dem ersten bzw. zweiten Messring zugeordneten ersten bzw. zweiten Sensors zu bestimmen. Die Messringe weisen beispielsweise magnetische oder optische Markierungen auf, welche von den Sensoren erfasst werden und als elektrische Signale an das Auswertungsmodul übertragen werden. Das Auswertungsmodul ist eingerichtet, um eine Phasendifferenz zwischen diesen elektrischen Signalen zu bestimmen und einem Verdrehwinkel respektive einem zwischen den Drehteilen wirkenden Drehmoment zuzuordnen. Der erste oder der zweite Messring können insbesondere mit einem Ende des mindestens einen starren Übertragungselements verbunden sein.

Bevorzugt ist an einer Aussenseite des ersten und/oder zweiten Drehteils ein Aussenlager zur Lagerung in einer Halterung angeordnet. Das erste und zweite Drehteil werden dadurch in der Halterung fixiert, wobei gewährleistet ist, dass das erste und/oder zweite Drehteil in der Halterung frei verdrehbar ist. Dies ermöglicht die Anordnung des Drehmomentsensors in einer vorgegebenen Konstruktion wie z.B. in einem Tretlagergehäuse eines Fahrradrahmens.

Vorzugsweise sind das erste und/oder zweite Drehteil eingerichtet, um die Muskelkraft einer Person als Drehmomentkraft am ersten und/oder zweiten Drehteil und/oder um eine Drehmomentkraft eines Motors am ersten und/oder zweiten Drehteil aufzunehmen. Das erste oder zweite Drehteil ist dabei eingerichtet, um eine Drehmomentkraft abzugeben, beispielsweise über einen Abtrieb und eine Kette an ein Hinterrad eines Fahrrads. Am ersten und/oder zweiten Drehteil können dazu irgendwelche Bauteile oder Massnahmen vorgesehen sein, wie z.B. Tretkurbeln oder Flansche.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: zeigt eine erste Ausführungsvariante des erfindungsgemässen Drehmomentsensors;
- Fig. 2: zeigt die erste Ausführungsvariante des erfindungsgemässen Drehmomentsensors in einer alternativen Bauweise;
- Fig. 3: zeigt eine zweite Ausführungsvariante des erfindungsgemässen Drehmomentsensors; und
- Fig. 4: zeigt eine dritte Ausführungsvariante des erfindungsgemässen Drehmomentsensors.

Grundsätzlich sind in den Figuren gleiche Teile mit gleichen Bezugszeichen versehen.

### Wege zur Ausführung der Erfindung

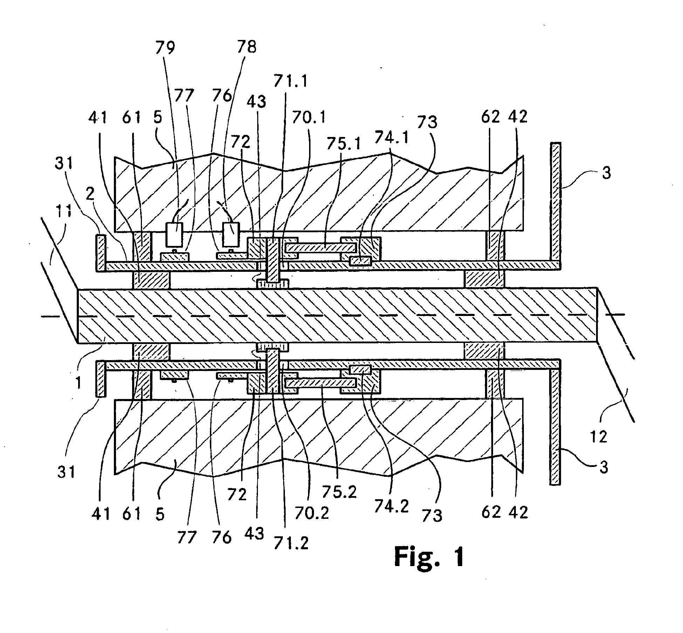

Fig. 1 zeigt die Prinzipskizze einer Ausführungsvariante des erfindungsgemässen Drehmomentsensors. Der Drehmomentsensor kann für unterschiedlichste Anwendungen eingesetzt werden, bei welchen ein Antriebsdrehmoment zu übertragen und zu messen ist. In Fig. 1 ist als Beispiel die Tretvorrichtung eines Fahrrads gezeigt. In anderen Anwendungen kann der Drehmomentsensor in einer Tretvorrichtung eines Hometrainers, in einem Handkurbelantrieb für einen Rollstuhl oder in irgendeiner anderen Anwendung eingesetzt werden.

Wie in Fig. 1 skizziert, ist eine Kurbelwelle 1, welche das erste Drehteil bildet, angeordnet, an welcher Kurbeln 11, 12 angebracht sind, also z.B. Tret- oder Handkurbeln, sodass eine Person mit Füssen oder Händen ein Drehmoment an die Kurbelwelle 1 übertragen kann. Anstelle oder zusätzlich zu den Kurbeln 11, 12 kann die Kurbelwelle 1 mit einem Motor, also z.B. einem Elektro-, Verbrennungs-, Druckluftmotor oder irgendeinem anderen Motor, verbunden sein, mit welchem ein (gegebenenfalls zusätzliches) Drehmoment an die Kurbelwelle 1 übertragen wird. Statt eine Motorkraft an die Kurbelwelle 1 zu übertragen, kann an der nachfolgend beschriebenen Antriebshülse 2 wie in Fig. 1 skizziert ein Anschlussflansch 31 vorgesehen sein, um z. B. über eine Zahnrad- oder Kettenverbindung oder irgendeine andere Verbindung eine Motorkraft an die Antriebshülse 2 zu übertragen. Koaxial zur Kurbelwelle 1 ist eine Antriebshülse 2, welche das zweite Drehteil bildet, angeordnet, wobei wie nachfolgend gezeigt das auf die Kurbelwelle 1 wirkende Drehmoment an die Antriebshülse 2 übertragen wird. An der Antriebshülse 2 ist ein Abtrieb 3 oder ein Adapter für einen solchen Abtrieb angebracht, wie beispielsweise ein Kettenblatt oder eine Riemenscheibe, um eine Antriebskraft beispielsweise auf ein Hinterrad eines Fahrrads, auf ein Rad eines Rollstuhls oder auf eine Schwungscheibe eines Hometrainers zu leiten. Auch die Antriebshülse 2 kann zusätzlich mit einem Motor verbunden sein, mit welchem ein Drehmoment auf die Antriebshülse 2 übertragen wird. Zwischen der Kurbelwelle 1 und der Antriebshülse 2, zwischen der Antriebshülse 2 und dem Abtrieb 3 und/oder zwischen dem Motor und der Antriebshülse 2 können ein oder mehrere Freilaufeinrichtungen angeordnet sein, welche ein Drehmoment nur in einer Drehrichtung übertragen und in der anderen Drehrichtung eine freie Verdrehung gewährleisten.

Zwischen der Kurbelwelle 1 und der Antriebshülse 2 sind zwei Innenlager 41, 42, weiche insbesondere als Kugellager oder Nadellager ausgeführt sein können, angebracht, so dass sich die Antriebshülse 2 gegenüber der Kurbelwelle 1 praktisch widerstandslos frei verdrehen kann.

Die Antriebshülse 2 ist in einer Halterung 5 gelagert, wobei zwischen der Antriebshülse 2 und der Halterung 5 zwei Aussenlager 61, 62, welche wiederum insbesondere als Kugellager oder Nadellager ausgeführt sein können, angebracht sind, so dass sich die Antriebshülse 2 gegenüber der Halterung 5 frei verdrehen kann. Die Halterung 5 wird beispielsweise durch die Büchse eines Tretlagers eines Fahrrads gebildet oder durch entsprechende Vorrichtungen eines Rollstuhls oder Hometrainers.

Die Antriebshülse 2 weist einen oder mehrere Durchbrüche 70.1, 70.2 auf, welche als kreisförmige Bohrungen ausgebildet sein können. Wie in Fig. 1 skizziert, sind ein oder mehrere Bolzen 71.1, 71.2 vorgesehen, wobei die ersten Enden der Bolzen 71.1, 71.2 fest in der Kurbelwelle 1 verankert sein können, also z.B. damit verschraubt oder verklebt sein können. In der Ausführungsform welche in Fig. 1 skizziert ist, sind die Bolzen 71.1, 71.2 stattdessen in einem Freilauf 43 fest verankert, welcher an der Kurbelwelle 1 angebracht ist. Der Freilauf 43 bewirkt, dass die Kraftübertragung zwischen der Kurbelwelle 1 auf die Bolzen 71.1, 71.2 nur in einer Drehrichtung erfolgt, während sich in der anderen Drehrichtung die Kurbelwelle gegenüber den Bolzen 71.1, 71.2 frei verdrehen kann. Die Bolzen 71.1, 71.2 sind durch die Durchbrüche 70.1, 70.2 hindurchgeführt, so dass die zweiten Enden der Bolzen 71.1, 71.2 auf einer Aussenseite der Antriebshülse 2 angeordnet sind. An den zweiten Enden der Bolzen ist ein erster Haltering 72 angebracht, welcher mit den Bolzen 71.1, 71.2 fest verbunden, also z.B. damit verschraubt oder verklebt ist. Ein Innenmass der Durchbrüche 70.1, 70.2 und ein Aussenmass der Bolzen 71.1, 71.2 sind dabei so gewählt, dass dazwischen ein Spalt besteht, so dass sich bei einer Drehung der Kurbelwelle 1 die Bolzen 71.1, 71.2 zunächst frei in den Durchbrüchen 70.1, 70.2 bewegen, bevor sie am Rand der Durchbrüche 70.1, 70.2 anstossen und somit die Drehung der Kurbelwelle 1 an die Antriebshülse 2 übertragen wird.

Der erste Haltering 72 ist gegenüber der Antriebshülse 2 frei verdrehbar, beispielsweise besteht zwischen dem ersten Haltering 72 und der Antriebshülse 2 ein Spalt. An der Aussenseite der Antriebshülse 2 ist ferner ein zweiter Haltering 73 angebracht, weicher mit einem oder mehreren Verbindungsmittel 74.1, 74.2 mit der Antriebshülse fest verbunden, also z.B. verschraubt oder verklebt ist.

Der erste Haltering 72 ist über einen oder mehrere Dehnstäbe 75.1, 75.2 mit dem zweiten Haltering 73 verbunden. Die Dehnstäbe 75.1, 75.2 sind im ersten und zweiten Haltering 72, 73 fest verankert, also beispielsweise damit verschraubt oder verklebt.

Am ersten Haltering 72 ist ein erster Messring 76 angebracht, welcher sich gegenüber der Antriebshülse 2 ebenfalls frei verdrehen kann. Ein zweiter Messring 77 ist auf der Aussenseite der Antriebshülse 2 angebracht, welcher gegenüber der Antriebshülse 2 fest verankert ist, also beispielsweise damit verschraubt oder verklebt ist.

Dem ersten und zweiten Messring 76, 77 ist ein erster und zweiter Sensor 78, 79 zugeordnet. Der erste und zweite Sensor 78, 79 ist beispielsweise in der Halterung 5 fest verankert, also z.B. damit verschraubt oder verklebt. Am ersten und zweiten Messring 76, 77 sind Indexierungen angebracht, also beispielsweise in einem regelmässigen Abstand angebrachte magnetische oder optische Markierungen, welche im ersten und zweiten Sensor 78, 79 ein entsprechendes erstes und zweites elektrisches Signal erzeugen, wobei eine Phasendifferenz zwischen dem ersten und zweiten elektrischen Signal einem Verdrehwinkel zwischen dem ersten und zweiten Messring entspricht. Der Verdrehwinkel ist wiederum abhängig vom Drehmoment, welches von der Kurbelwelle 1 auf die Antriebshülse 2 übertragen wird.

Die Funktionsweise des erfindungsgemässen Drehmomentsensors ist wie folgt. Durch eine Antriebskraft, also durch Muskel- oder Motorkraft, wirkt ein Drehmoment auf die Kurbelwelle 1. Für eine bestimmte Drehrichtung wird über den Freilauf 43 sowie einen oder mehrere Bolzen 71.1, 71.2, den ersten Halterring 72, einen oder mehrere Dehnstäbe 75.1, 75.2 und den zweiten Haltering 73 wird das Drehmoment an die Antriebshülse 2 übertragen, welches damit am Abtrieb 3 zur Verfügung steht. Die Dehnstäbe 75.1, 75.2 sind so dimensioniert, dass sich diese durchbiegen und sich somit der erste Messring 76 gegenüber dem zweiten Messring 77 verdreht, wobei der Verdrehwinkel proportional ist zum zwischen der Kurbelwelle 1 und der Antriebshülse 2 übertragenen Drehmoment. Aus der Phasendifferenzmessung des im ersten und zweiten Sensor 78, 79 erzeugten ersten und zweiten elektrischen Signals, welche dem Verdrehwinkel zwischen dem ersten und zweiten Messring 76, 77 entspricht, wird das zwischen der Kurbelwelle 1 und der Antriebshülse 2 übertragene (und somit das auf die Kurbelwelle 1 wirkende oder am Abtrieb 3 zur Verfügung stehende) Drehmoment bestimmt.

Die beschriebenen Bestandteile des erfindungsgemässen Drehmomentsensors sind aus üblichen Materialien hergestellt, also beispielsweise aus Aluminium, rostbeständigem Stahl, Messing, Kunststoff oder irgendeinem anderen geeigneten Material. Die Dehnstäbe 75.1, 75.2 können insbesondere auch aus Karbon hergestellt sein.

Es können irgendeine Anzahl Durchbrüche 70.1, 70.2 und Bolzen 71.1, 71.2 angebracht sein, beispielsweise je 4, 6 oder 8, welche in regelmässigen Abständen entlang dem Umfang der Antriebshülse 2 angebracht sind. Bei Bedarf können auch nur ein einzelner Durchbruch 70.1 und ein einzelner Bolzen 71.1 angebracht sein, wobei in diesem Fall zwischen dem ersten Haltering 72 und der Antriebshülse 2 ein Lager, also insbesondere ein Kugel- oder Nadellager angebracht sein kann.

Auch die Anzahl Dehnstäbe 75.1, 75.2 kann je nach Bedarf variiert werden. Bei Anwendungen mit einem sehr hohen Drehmoment können beispielsweise 16, 20 oder noch mehr Dehnstäbe 75.1, 75.2 angebracht sein. Je nach Bedarf können nur 4 Dehnstäbe 75.1, 75.2 oder sogar nur ein einzelner Dehnstab 75.1 angebracht sein.

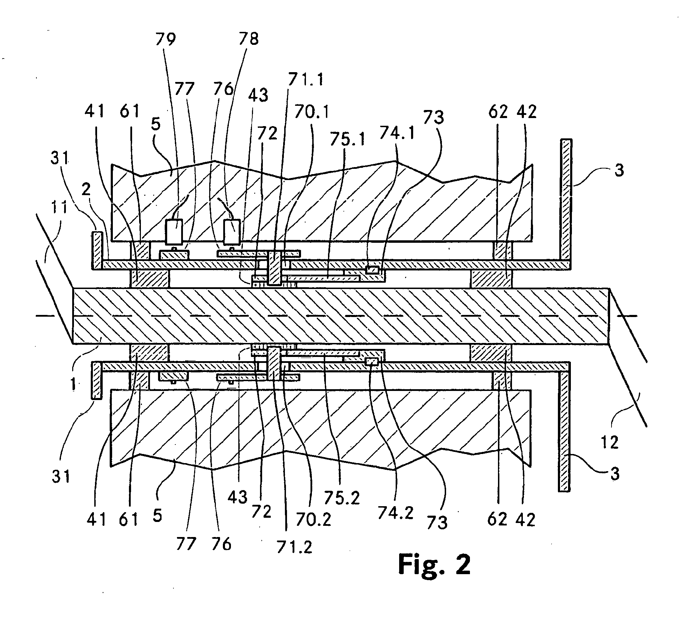

Fig. 2 zeigt eine Ausführungsvariante des erfindungsgemässen Drehmomentsensors, bei welchem der erste und zweite Halterring 72, 73 sowie die Dehnstäbe 75.1, 75.2 innenliegend der Antriebshülse 2 angeordnet sind. Je nach Anwendung kann ein Drehmomentsensor gemäss Fig. 2 kompakter und platzsparender gebaut werden.

Die Dehnstäbe 75.1, 75.2 können statt parallel zur Achse der Kurbelwelle 1 radial dazu angeordnet sein. Auf den ersten und zweiten Haltering 72, 73 kann gegebenenfalls verzichtet werden und die Dehnstäbe können beispielsweise im Freilauf 43 oder direkt in der Kurbelwelle 1 sowie in der Antriebshülse 2 verankert sein, also beispielsweise damit verklebt oder verschraubt sein.

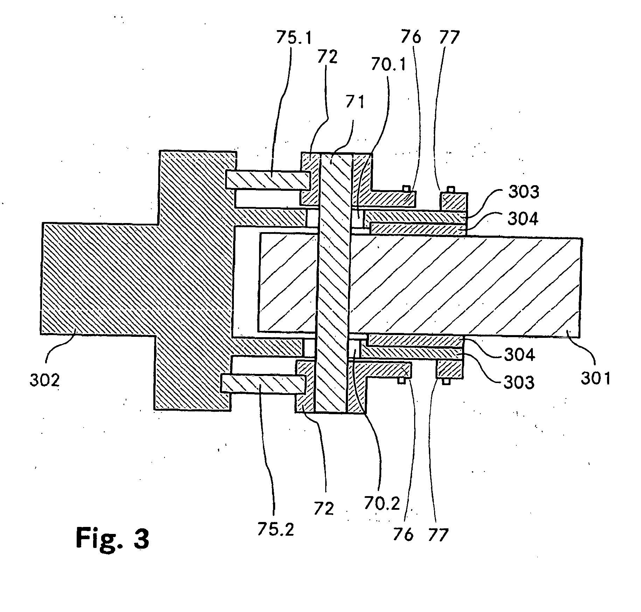

Fig. 3 zeigt eine Ausführungsvariante des erfindungsgemässen Drehmomentsensors für eine Anwendung an rotierenden Wellen, wobei der Drehmomentsensor in kompakter Weise dazwischengeschaltet ist. Die Achse einer Antriebswelle 301, welche das erste Drehteil bildet, und die Achse einer Abtriebswelle 302, welche das zweite Drehteil bildet, liegen aufeinander. Die Abtriebswelle 302 weist eine Hülse 303 auf, welche ein Ende der Antriebswelle 301 umschliesst. Zwischen der Antriebswelle 301 und der Hülse 303 ist ein Lager 304 angeordnet, insbesondere ein Kugellager oder ein Nadellager. Somit ist die Antriebswelle 301 in der Hülse 303 der Abtriebswelle 302 gehalten, wobei die Antriebswelle 301 gegenüber der Abtriebswelle 302 frei verdrehbar ist.

Die Hülse 303 weist einen oder mehrere Durchbrüche 70.1, 70.2 auf, wobei ein Bolzen 71, welcher ein starres Übertragungselement bildet, durch die Durchbrüche 70.1, 70.2 hindurchgeführt ist. Ein Innenmass der Durchbrüche 70.1, 70.2 und ein Aussenmass des Bolzens 71 sind dabei so gewählt, dass dazwischen ein Spalt besteht, so dass sich bei einer Drehung der Antriebswelle 301 der Bolzen 71 zunächst frei in den Durchbrüchen 70.1, 70.2 bewegt, bevor dieser am Rand der Durchbrüche 70.1, 70.2 anstösst und dadurch die Drehung der Antriebswelle 301 an die Abtriebswelle 302 übertragen wird.

Wie in Fig. 3 skizziert, verbindet der Bolzen 71 die Antriebswelle 301 mit einem ersten Haltering 72. Der erste Haltering 72 ist gegenüber der Hülse 303 frei verdrehbar, beispielsweise besteht zwischen einer Innenfläche des Halterings 72 und einer Aussenfläche der Hülse 303 ein Spalt. Der erste Haltering 72 ist über einen oder mehrere Dehnstäbe 75.1, 75.2, welche beispielsweise parallel zu den Achsen der Antriebswelle 301 und der Abtriebswelle 302 angeordnet sind, mit der Abtriebswelle 302 verbunden. Somit wird ein Drehmoment welches auf die Antriebswelle 301 wirkt über den Übertragungszapfen 71 an den ersten Haltering 72 geleitet und von dort weiter über die Dehnstäbe 75.1, 75.2 an die Abtriebswelle 302.

Da der Bolzen 71 in den Durchbrüchen 70.1, 70.2 frei beweglich ist, wird das Drehmoment von der Antriebswelle 301 bis zu einem bestimmten Drehmomentwert über die Dehnstäbe 70.1, 70.2 an die Abtriebswelle 302 übertragen, wobei sich die Dehnstäbe 70.1, 70.2 proportional dem Drehmoment durchbiegen. Bei einem gewissen maximalen Drehmoment und somit bei einem gewissen maximalen Verdrehwinkel stösst der Bolzen 71 an die Hülse 303 an und das Drehmoment wird über den Bolzen 71 von der Antriebswelle 301 an die Hülse 303 der Abtriebswelle 302 übertragen.

An einer Seite des ersten Halterings 72 ist ein erster Messring 76 angebracht. Ein zweiter Messring 77 ist mit der Aussenseite der Hülse 303 fest verbunden. Der erste Messring 76 und der zweite Messring 77 weisen Indexierungen auf, also beispielsweise in regelmässigen Abständen angebrachte magnetische oder optische Markierungen, welche in einem ersten und einem zweiten Sensor (nicht gezeichnet) ein entsprechendes erstes und zweites elektrisches Signal erzeugen, wobei eine Phasendifferenz zwischen dem ersten und zweiten elektrischen Signal einem Verdrehwinkel zwischen dem ersten und zweiten Messring 76, 77 entspricht. Über eine Umrechnung kann dieser Verdrehwinkel dem Drehmoment zugeordnet werden, welches von der Antriebsachse 301 an die Abtriebsachse 302 übertragen wird.

Die Antriebsachse 301 und die Abtriebsachse 302 können Befestigungseinrichtungen wie Nuten oder Fräsungen aufweisen, um daran einen Antrieb wie einen Motor und einen Abtrieb wie ein Getriebe oder ein Rad festzumachen.

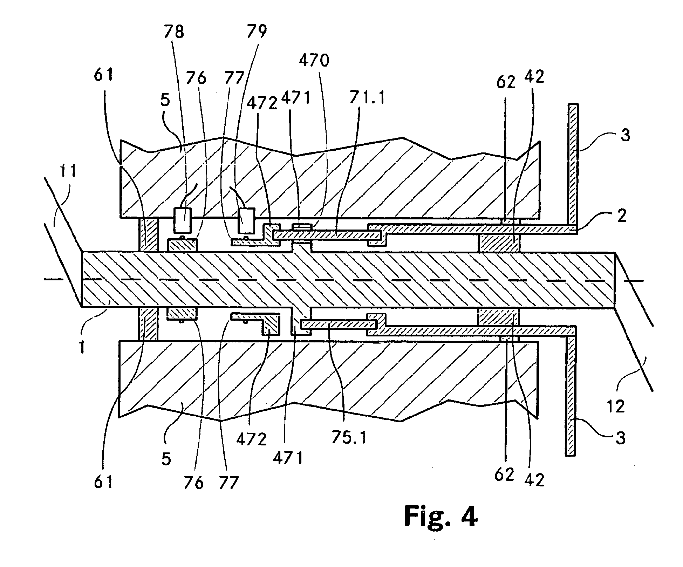

Fig. 4 zeigt eine weitere Ausführungsvariante des erfindungsgemässen Drehmomentsensors in einer besonders kompakten Bauweise, beispielsweise zur Anwendung in einem Fahrrad. Die Kurbelwelle 1, also z.B. die Tretkurbelwelle eines Fahrrads, weist an den Enden Kurbeln 11, 12, also z.B. Tretkurbeln, auf. Eine Antriebshülse 2 ist konzentrische zur Kurbelwelle 1 angeordnet. Zwischen der Antriebshülse 2 und der Kurbelwelle 1 ist ein Innenlager 42 angeordnet. Die Kurbelwelle 1 und die Antriebshülse 2 sind koaxial in einer Halterung 5 angebracht, welche beispielsweise an einem Fahrradrahmen angeordnet ist. Zwischen der Kurbelwelle 1 und der Halterung 5 sowie zwischen der Antriebshülse 2 und der Halterung 5 sind zwei Aussenlager 61, 62 angeordnet.

Die Antriebshülse 2 ist somit konzentrisch in der Halterung 5 gehalten und die Kurbelwelle 1 ist konzentrisch in der Antriebshülse 2 gehalten, wobei die Enden der Kurbelwelle 1 aus der Halterung 5 hervorstehen. Die Antriebshülse 2 steht nur an einem Ende aus der Halterung 5 hervor. An diesem Ende ist ein Abtrieb 3 angebracht, um eine Antriebskraft beispielsweise auf ein Hinterrad eines Fahrrads zu übertragen.

Aufgrund der Anordnung des Innenlagers 42 und der zwei Aussenlager 61, 62 kann sich die Antriebshülse 2 gegenüber der Kurbelwelle 1 und der Halterung 5 frei verdrehen und die Kurbelwelle 1 ihrerseits kann sich gegenüber der Halterung 5 ebenfalls frei verdrehen.

In einem mittleren Teil weist die Kurbelwelle 1 einen Ring 471 auf, welcher Teil der Kurbelwelle 1 ist oder mit der Kurbelwelle 1 fest verbunden ist. Der Ring 471 kann auch über einen Freilauf mit der Kurbelwelle 1 verbunden sein, so dass sich der Ring 471 in die eine Umdrehungsrichtung gegenüber der Kurbelwelle frei verdrehen kann und in die andere Umdrehungsrichtung von der Kurbelwelle mitgedreht wird.

Der Ring 471 weist einen oder mehrere Durchbrüche 470 auf, durch welche mindestens ein Bolzen 71.1, welcher ein starres Übertragungselement bildet, geführt ist, dessen eines Ende mit der Antriebshülse 2 verbunden ist. Der mindestens eine Bolzen 71.1 ist am anderen Ende mit dem Haltering 472 verbunden.

Zwischen dem Ring 471 und der Antriebshülse 2 ist ferner mindestens ein Dehnstab 75.1, welcher ein elastisches Übertragungselemente bildet, angeordnet. Ein Ende des mindestens einen Dehnstabs 75.1 ist mit dem Ring 471 fest verbunden und das andere Ende des mindestens einen Dehnstabs 75.1 ist mit der Antriebshülse 2 fest verbunden.

Bis zu einem maximalen Drehmoment und somit einem maximalen Verdrehwinkel zwischen der Kurbelwelle 1 und der Antriebshülse 2 erfolgt die Übertragung des Drehmoments über den mindestens einen Dehnstab 75.1, wobei sich die Kurbelwelle 1 und die Antriebshülse 2 entsprechend dem dazwischen wirkenden Drehmoment wegen der Durchbiegung des mindestens einen Dehnstabs 75.1 verdrehen. Beim maximalen Verdrehwinkel steht der mindestens eine Bolzen 71.1 am Rand des einen oder der mehreren Durchbrüche 470 an, womit das Drehmoment über den Bolzen 71.1 von der Kurbelwelle 1 an die Antriebshülse 2 übertragen wird.

Zur Messung des Verdrehwinkels ist an der Kurbelwelle 1 ein erster Messring 76 angebracht und am Haltering 472 ist ein zweiter Messring 77 angebracht. Somit ist der erste Messring 76 mit der Kurbelwelle und der zweite Messring 77 mit der Antriebshülse verbunden. Dem ersten und zweiten Messring 76, 77 ist ein erster und ein zweiter Sensor 78, 79 zugeordnet, wobei aus einer erwähnten Phasendifferenzmessung der Verdrehwinkel und somit das Drehmoment festgestellt wird.

Zusammenfassend ist festzustellen, dass gemäss der Erfindung ein Drehmomentsensor geschaffen wird, welcher gleichzeitig eine kompakte Bauweise als auch einen Überlastschutz aufweist. Durch die kompakte Bauweise lässt sich der Drehmomentsensor leicht in bestehenden Einrichtungen wie z.B. einem Fahrrad verwenden.

## Patentansprüche

1. Drehmomentsensor, zur Messung eines Antriebsdrehmomentes einer Tretvorrichtung z.B. in einem Fahrrad oder einem Hometrainer, umfassend:
a) ein erstes Drehteil (1) und eln zweites Drehteil (2), wobei das erste Drehteil (1) eingerichtet ist, um daran eine Drehmomentkraft anzulegen;
b) mindestens ein elastisches Übertragungselement (75.1, 75.2), welches derart zwischen dem ersten Drehteil (1) und dem zweiten Drehteil (2) angeordnet ist, dass die Drehmomentkraft vom ersten Drehteil (1) über das mindestens eine elastische Übertragungselement (75.1, 75.2) an das zweite Drehteil (2) übertragen wird, wobei sich das erste Drehteil (1) gegenüber dem zweiten Drehteil (2) in Funktion der angelegten Drehmomentkraft um einen messbaren und der Drehmomentkraft zuordenbaren Verdrehwinkel verdreht;
c) mindestens ein starres Übertragungselement (71, 71.1, 71.2), welches mit dem ersten Drehteil (1) respektive mit dem zweiten Drehteil (2) fest verbunden ist und in mindestens einem Durchbruch (70.1, 70.2, 470) des zweiten Drehteils (2) respektive des ersten Drehteils (1) derart geführt ist, dass bei einem maximalen Verdrehwinkel das mindestens eine starre Übertragungselement (71, 71.1, 71.2) an einem Rand des mindestens einen Durchbruchs (70.1, 70.2, 470) anschlägt und somit die Drehmomentkraft vom ersten Drehteil über das mindestens eine starre Übertragungselement (71, 71.1, 71.2) an das zweite Drehteil übertragen wird,
d) das erste Drehteil eine Welle (1) und das zweite Drehteil eine Hülse (2) umfasst, wobei die Welle (1) in der Hülse (2) drehbar gelagert ist,
**dadurch gekennzeichnet, dass**
e) an einer Aussenseite des zweiten Drehteils (1, 2) ein Aussenlager (61, 62) zur Lagerung in einer Halterung (5) einer Tretvorrichtung angeordnet ist.

2. Drehmomentsensor nach Anspruch 1, **dadurch gekennzeichnet, dass** der mindestens eine Durchbruch (70.1, 70.2, 470) an der Antriebshülse (2) ausgebildet ist.

3. Drehmomentsensor nach einem der Ansprüche 1 oder 2, **dadurch gekennzeichnet, dass** ein Ende des mindestens einen starren Übertragungselements (71, 71.1, 71.2) mit dem ersten Drehteil, das andere Ende des mindestens einen starren Übertragungselements (71, 71.1, 71.2) mit einem Ende des mindestens einen elastischen Übertragungselements (75.1, 75.2) und das andere Ende des mindestens einen elastischen Übertragungselements (75.1, 75.2) mit dem zweiten Drehteil verbunden sind.

4. Drehmomentsensor nach Anspruch 1, **dadurch gekennzeichnet, dass** die Kurbelwelle (1) ein scheibenförmiges Teil aufweist, an welchem der mindestens eine Durchbruch (70.1, 70.2, 470) ausgebildet ist.

5. Drehmomentsensor nach einem der Ansprüche 1 oder 4, **dadurch gekennzeichnet, dass** ein Ende des mindestens einen elastischen Übertragungselements (75.1, 75.2) mit dem ersten Drehteil und das andere Ende des mindestens einen elastischen Übertragungselements mit dem zweiten Drehteil verbunden sind.

6. Drehmomentsensor nach einem der Ansprüche 1 bis 5, **dadurch gekennzeichnet, dass** das mindestens eine elastische Übertragungselement mindestens einen Dehnstab (75.1) umfasst, welcher im Wesentlichen parallel oder radial zu einer Achse des zweiten Drehteils (2) angeordnet ist.

7. Drehmomentsensor nach einem der Ansprüche 1 bis 6, **dadurch gekennzeichnet, dass** das mindestens eine starre Übertragungselement einen Bolzen (71.1) umfasst, welcher im Wesentlichen parallel oder radial zu einer Achse des ersten Drehteils (1) angeordnet ist.

8. Drehmomentsensor nach einem der Ansprüche 1 bis 7, **dadurch gekennzeichnet, dass** ein erster Messring (76) mit dem ersten Drehteil (1) und ein zweiter Messring (77) mit dem zweiten Drehteil (2) verbunden sind, wobei ein Auswertungsmodul angeordnet ist, um eine Phasendifferenz zwischen einem ersten bzw. zweiten Sensorsignal eines dem ersten bzw. zweiten Messring (76, 77) zugeordneten ersten bzw. zweiten Sensors (78, 79) zu bestimmen.

9. Drehmomentsensor nach einem der Ansprüche 1 bis 8, **dadurch gekennzeichnet, dass** an einer Aussenseite des ersten Drehteils (1, 2) ein Aussenlager (61, 62) zur Lagerung in einer Halterung (5) angeordnet ist.

10. Drehmomentsensor nach einem der Ansprüche 1 bis 9, **dadurch gekennzeichnet, dass** durch Bauteile, insbesondere durch Tretkurbeln oder Flansche, das erste und/oder zweite Drehteil eingerichtet sind, um die Muskelkraft einer Person als Drehmomentkraft am ersten und/oder zweiten Drehteil und/oder um eine Drehmomentkraft eines Motors am ersten und/oder zweiten Drehteil aufzunehmen.

11. Verwendung eines Drehmomentsensors, umfassend:
a) ein erstes Drehtell (1) und ein zweites Drehteil (2), wobei das erste Drehteil (1) eingerichtet ist, um daran eine Drehmomentkraft anzulegen;
b) mindestens ein elastisches Übertragungselement (75.1, 75.2), welches derart zwischen dem ersten Drehteil (1) und dem zweiten Drehteil (2) angeordnet ist, dass die Drehmomentkraft vom ersten Drehteil (1) über das mindestens eine elastische Übertragungselement (75.1, 75.2) an das zweite Drehteil (2) übertragen wird, wobei sich das erste Drehteil (1) gegenüber dem zweiten Drehteil (2) in Funktion der angelegten Drehmomentkraft um einen messbaren und der Drehmomentkraft zuordenbaren Verdrehwinkel verdreht;
c) mindestens ein starres Übertragungselement (71, 71.1, 71.2), welches mit dem ersten Drehteil (1) respektive mit dem zweiten Drehteil (2) fest verbunden ist und in mindestens einem Durchbruch (70.1, 70.2, 470) des zweiten Drehteils (2) respektive des ersten Drehtells (1) derart geführt ist, dass bei einem maximalen Verdrehwinkel das mindestens eine starre Übertragungselement (71, 71.1, 71.2) an einem Rand des mindestens einen Durchbruchs (70.1, 70.2, 470) anschlägt und somit die Drehmomentkraft vom ersten Drehteil über das mindestens eine starre Übertragungselement (71, 71.1, 71.2) an das zweite Drehteil übertragen wird, und insbesondere weiter umfassend:
d) an einer Aussenseite des ersten und/oder zweiten Drehteils (1,2) ein Aussenlager (61,62) zur Lagerung in einer Halterung (5) angeordnet ist
zur Messung eines Antriebsdrehmomentes einer Tretvorrichtung.

## Claims

1. Torque sensor, for measuring a drive torque of a pedalling device, for example a bicycle or a home trainer, comprising:
a) a first rotary part (1) and a second rotary part (2), the first rotary part (1) being designed to allow the force of a torque to be applied to it;
b) at least one elastic transmission element (75.1, 75.2), which is arranged between the first rotary part (1) and the second rotary part (2) in such a way that the force of the torque is transmitted from the first rotary part (1) to the second rotary part (2) via the at least one elastic transmission element (75.1, 75.2), the first rotary part (1) rotating with respect to the second rotary part (2) as a function of the applied force of the torque by an angle of rotation that can be measured and can be assigned to the force of the torque;
c) at least one rigid transmission element (71, 71.1, 71.2), which is fixedly connected to the first rotary part (1) and respectively to the second rotary part (2) and is guided in at least one through-hole (70.1, 70.2, 470) of the second rotary part (2) and respectively of the first rotary part (1) in such a way that, with a maximum angle of rotation, the at least one rigid transmission element (71, 71.1, 71.2) strikes against a periphery of the at least one through-hole (70.1, 70.2, 470), and consequently the force of the torque is transmitted from the first rotary part to the second rotary part via the at least one rigid transmission element (71, 71.1, 71.2),
d) the first rotary part comprises a shaft (1) and the second rotary part comprises a sleeve (2), the shaft (1) being rotatably mounted in the sleeve (2),
**characterized in that**
e) an outer bearing (61, 62) for mounting in a holder (5) of a pedalling device is arranged on an outer side of the second rotary part (1, 2).

2. Torque sensor according to Claim 1, **characterized in that** the at least one through-hole (70.1, 70.2, 470) is formed on the drive sleeve (2).

3. Torque sensor according to either of Claims 1 and 2, **characterized in that** one end of the at least one rigid transmission element (71, 71.1, 71.2) is connected to the first rotary part, the other end of the at least one rigid transmission element (71, 71.1, 71.2) is connected to one end of the at least one elastic transmission element (75.1, 75.2) and the other end of the at least one elastic transmission element (75.1, 75.2) is connected to the second rotary part.

4. Torque sensor according to Claim 1, **characterized in that** the crankshaft (1) has a disc-shaped part, on which the at least one through-hole (70.1, 70.2, 470) is formed.

5. Torque sensor according to one of Claims 1 to 4, **characterized in that** one end of the at least one elastic transmission element (75.1, 75.2) is connected to the first rotary part and the other end of the at least one elastic transmission element is connected to the second rotary part.

6. Torque sensor according to one of Claims 1 to 5, **characterized in that** the at least one elastic transmission element comprises at least one extensible rod (75.1), which is arranged substantially parallel or radial to an axis of the second rotary part (2).

7. Torque sensor according to one of Claims 1 to 6, **characterized in that** the at least one rigid transmission element comprises a bolt (71.1), which is arranged substantially parallel or radial to an axis of the first rotary part (1).

8. Torque sensor according to one of Claims 1 to 7, **characterized in that** a first measuring ring (76) is connected to the first rotary part (1) and a second measuring ring (77) is connected to the second rotary part (2), an evaluation module being arranged in order to determine a difference in phase between a first sensor signal and a second sensor signal of a first sensor (78) and a second sensor (79) assigned to the first measuring ring (76) and the second measuring ring (77), respectively.

9. Torque sensor according to one of Claims 1 to 8, **characterized in that** an outer bearing (61, 62) for mounting in a holder (5) is arranged on an outer side of the first rotary part (1, 2).

10. Torque sensor according to one of Claims 1 to 9, **characterized in that** the first and/or second rotary part is/are designed to take up the muscular force of a person as the force of a torque at the first and/or second rotary part and/or to take up the force of a torque of a motor at the first and/or second rotary part through components, in particular through pedal cranks or flanges.

11. Use of a torque sensor, comprising:
a) a first rotary part (1) and a second rotary part (2), the first rotary part (1) being designed for the force of a torque to be applied to it;
b) at least one elastic transmission element (75.1, 75.2), which is arranged between the first rotary part (1) and the second rotary part (2) in such a way that the force of the torque is transmitted from the first rotary part (1) to the second rotary part (2) via the at least one elastic transmission element (75.1, 75.2), the first rotary part (1) rotating with respect to the second rotary part (2) as a function of the applied force of the torque by an angle of rotation that can be measured and can be assigned to the force of the torque;
c) at least one rigid transmission element (71, 71.1, 71.2), which is fixedly connected to the first rotary part (1) and respectively to the second rotary part (2) and is guided in at least one through-hole (70.1, 70.2, 470) of the second rotary part (2) and respectively of the first rotary part (1) in such a way that, with a maximum angle of rotation, the at least one rigid transmission element (71, 71.1, 71.2) strikes against a periphery of the at least one through-hole (70.1, 70.2, 470), and consequently the force of the torque is transmitted from the first rotary part to the second rotary part via the at least one rigid transmission element (71, 71.1, 71.2), and in particular also comprising:
d) an outer bearing (61, 62) for mounting in a holder (5) arranged on an outer side of the first and/or second rotary part (1, 2),
for measuring a drive torque of a pedalling device.

## Revendications

1. Capteur de couple pour mesurer un couple d'entraînement d'un pédalier par exemple dans une bicyclette ou un simulateur de route, comportant :
a) une première partie rotative (1) et une deuxième partie rotative (2), la première partie rotative (1) étant conçue pour y appliquer une force de couple ;
b) au moins un élément de transmission élastique (75.1, 75.2), lequel est disposé entre la première partie rotative (1) et la deuxième partie rotative (2) de telle sorte que la force de couple soit transmise, par le biais de l'au moins un élément de transmission élastique (75.1, 75.2), de la première partie rotative (1) à la deuxième partie rotative (2), la première partie rotative (1) tournant par rapport à la deuxième partie rotative (2), en fonction de la force de couple appliquée, d'un angle de torsion mesurable et pouvant être associé à la force de couple ;
c) au moins un élément de transmission rigide (71, 71.1, 71.2), lequel est relié solidement à la première partie rotative (1), respectivement à la deuxième partie rotative (2), et est guidé dans au moins un passage (70.1, 70.2, 470) de la deuxième partie rotative (2), respectivement de la première partie rotative (1), de telle sorte que, pour un angle de torsion maximal, l'au moins un élément de transmission rigide (71, 71.1, 71.2) vienne en butée contre un bord de l'au moins un passage (70.1, 70.2, 470) et que par conséquent la force de couple soit transmise, par le biais de l'au moins un élément de transmission rigide (71, 71.1, 71.2), de la première partie rotative à la deuxième partie rotative,
d) la première partie rotative comporte un arbre (1) et la deuxième partie rotative comporte une douille (2), l'arbre (1) étant monté à rotation dans la douille (2),
**caractérisé en ce que**
e) un palier extérieur (61, 62) est disposé sur un côté extérieur de la deuxième partie rotative (1, 2) pour le support sur palier dans un support (5) d'un pédalier.

2. Capteur de couple selon la revendication 1, **caractérisé en ce que** l'au moins un passage (70.1, 70.2, 470) est réalisé sur la douille d'entraînement (2).

3. Capteur de couple selon la revendication 1 ou 2, **caractérisé en ce qu'**une extrémité de l'au moins un élément de transmission rigide (71, 71.1, 71.2) est reliée à la première partie rotative, l'autre extrémité de l'au moins un élément de transmission rigide (71, 71.1, 71.2) est reliée à une extrémité de l'au moins un élément de transmission élastique (75.1, 75.2) et l'autre extrémité de l'au moins un élément de transmission élastique (75.1, 75.2) est reliée à la deuxième partie rotative.

4. Capteur de couple selon la revendication 1, **caractérisé en ce que** l'arbre à manivelle (1) comprend une partie en forme de disque sur laquelle est réalisé l'au moins un passage (70.1, 70.2, 470).

5. Capteur de couple selon la revendication 1 ou 4, **caractérisé en ce qu'**une extrémité de l'au moins un élément de transmission élastique (75.1, 75.2) est reliée à la première partie rotative et l'autre extrémité de l'au moins un élément de transmission élastique est reliée à la deuxième partie rotative.

6. Capteur de couple selon l'une quelconque des revendications 1 à 5, **caractérisé en ce que** l'au moins un élément de transmission élastique comporte au moins une barre extensible (75.1), laquelle est disposée essentiellement parallèlement à un axe de la deuxième partie rotative (2) ou radialement par rapport à celui-ci.

7. Capteur de couple selon l'une quelconque des revendications 1 à 6, **caractérisé en ce que** l'au moins un élément de transmission rigide comporte une cheville (71.1), laquelle est disposée essentiellement parallèlement à un axe de la première partie rotative (1) ou radialement par rapport à celui-ci.

8. Capteur de couple selon l'une quelconque des revendications 1 à 7, **caractérisé en ce qu'**une première bague de mesure (76) est reliée à la première partie rotative (1) et une deuxième bague de mesure (77) est reliée à la deuxième partie rotative (2), un module d'évaluation étant prévu pour déterminer une différence de phase entre un premier ou un deuxième signal de capteur d'un premier ou d'un deuxième capteur (78, 79) associé à la première ou à la deuxième bague de mesure (76, 77).

9. Capteur de couple selon l'une quelconque des revendications 1 à 8, **caractérisé en ce qu'**un palier extérieur (61, 62) est disposé sur un côté extérieur de la première partie rotative (1, 2) pour le support sur palier dans un support (5).

10. Capteur de couple selon l'une quelconque des revendications 1 à 9, **caractérisé en ce qu'**au moyen de composants, en particulier au moyen de manivelles de pédalier ou de flasques, la première et/ou la deuxième partie rotative est/sont conçue(s) pour recevoir la force musculaire d'une personne en tant que force de couple sur la première et/ou la deuxième partie rotative et/ou pour recevoir une force de couple d'un moteur sur la première et/ou la deuxième partie rotative.

11. Utilisation d'un capteur de couple, comportant :
a) une première partie rotative (1) et une deuxième partie rotative (2), la première partie rotative (1) étant conçue pour y appliquer une force de couple ;
b) au moins un élément de transmission élastique (75.1, 75.2), lequel est disposé entre la première partie rotative (1) et la deuxième partie rotative (2) de telle sorte que la force de couple soit transmise, par le biais de l'au moins un élément de transmission élastique (75.1, 75.2), de la première partie rotative (1) à la deuxième partie rotative (2), la première partie rotative (1) tournant par rapport à la deuxième partie rotative (2), en fonction de la force de couple appliquée, d'un angle de torsion mesurable et pouvant être associé à la force de couple ;
c) au moins un élément de transmission rigide (71, 71.1, 71.2), lequel est relié solidement à la première partie rotative (1), respectivement à la deuxième partie rotative (2), et est guidé dans au moins un passage (70.1, 70.2, 470) de la deuxième partie rotative (2), respectivement de la première partie rotative (1), de telle sorte que, pour un angle de torsion maximal, l'au moins un élément de transmission rigide (71, 71.1, 71.2) vienne en butée contre un bord de l'au moins un passage (70.1, 70.2, 470) et que par conséquent la force de couple soit transmise, par le biais de l'au moins un élément de transmission rigide (71, 71.1, 71.2), de la première partie rotative à la deuxième partie rotative, et comportant en outre notamment :
d) un palier extérieur (61, 62) disposé sur un côté extérieur de la première et/ou de la deuxième partie rotative (1, 2) pour le support sur palier dans un support (5)
pour mesurer un couple d'entraînement d'un pédalier.
